# EUROPÄISCHE PATENTSCHRIFT

(11) **EP 1 673 029 B1**
(45) Veröffentlichungstag und Bekanntmachung des Hinweises auf die Patenterteilung: **11.07.2012**
(21) Anmeldenummer: 05738279.8
(22) Anmeldetag: 02.05.2005
(51) Int. Cl.: A61C 17/06, B04B 11/04

(54) **SEDIMENTPEGELFÜHLER**
SEDIMENT LEVEL PROBE
SONDE DE NIVEAU DE SEDIMENT

(30) Priorität: 02.05.2004 DE 102004021828
(43) Veröffentlichungstag der Anmeldung: 28.06.2006
(60) Teilanmeldung: 10011577.3
(73) Patentinhaber: Dürr Dental AG, 74321 Bietigheim-Bissingen (DE)
(72) Erfinder: NONNENMACHER, Eberhardt, 74379 Ingersheim (DE); KLAFFKI, Kirsten, 74243 Langenbrettach (DE); WELLMANN, Peter, 74257 Untereisesheim (DE)
(74) Vertreter: Ostertag, Ulrich
(86) Internationale Anmeldenummer: PCT/EP2005/004747
(87) Internationale Veröffentlichungsnummer: WO 2005/104987

(56) Entgegenhaltungen:
- EP-A- 0 023 036
- EP-A- 0 300 439
- EP-A- 0 400 431
- EP-A- 0 852 129
- WO-A-92/18061
- DE-A1- 4 121 930
- DE-A1- 10 139 026
- US-A- 4 356 959

## Beschreibung

Die vorliegende Erfindung betrifft einen Sedimentpegelfühler gemäß dem Oberbegriff des Anspruches 1.

Ein derartiger Sedimentpegelfühler ist in der EP-A-0 300 439 beschrieben. Er weist eine Tastplatte auf, die von einer vertikal geführte Stange getragen ist. Durch einen Elektromagnete kann die Tastplatte zwangsweise angehoben werden, und nach Beenden der Bestromung des Elektromagneten sinkt die Tastplatte dann auf die Oberseite des im Sammelbehälter gebildeten Sedimentbettes ab. Die Stellung der Tastplatte wird durch einen Reed-Detektor überwacht,

Die EP-A-0 400 431 zeigt einen Sedimentpegelfühler, der ähnlichen Aufbau aufweist wie derjenige nach der EP-A-0 300 439.

Ein weiterer Sediment-Pegelfühler ist in der DE-A- 41 21 930 beschrieben. Er ist seitlich an einem Feststoff-Sammelbehälter befestigt und umfasst einen Tastkörper, der als becherförmiges Hohlteil an ein Tragelement angespritzt ist. Das Tragelement setzt sich zusammen aus einem vertikal bewegbaren Hebelarm, eine durch die Wand des Feststoff-Sammelbehälters verlaufende Welle und einem zweiten eine Fahnenanordnung tragenden Hebelarm, wobei die Fahnenanordnung mit Lichtschranken zusammenarbeitet und so die vertikale Position des Tastkörpers ermittelt wird.

Die Welle, die durch eine Lageröffnung durch die Wand des Feststoff-Sammelbehälters verläuft, vergrößert bei dieser Ausführung eines Sedimentpegelfühlers den radialen Platzbedarf, da die Welle eine gewisse Länge haben muss, um stabil und verwindungsfrei zu sein.

In vielen Fällen ist es wünschenswert, einen Abscheider zu haben, der trotz außenliegendem Pegelfühler einen geringen Durchmesser aufweist.

Diese Aufgabe wird erfindungsgemäß gelöst durch einen Sedimentpegelfühler mit den in Anspruch 1 angegebenen Merkmalen.

Dadurch, daß der Tastkörper durch ein bewegliches Teil einer Führungseinrichtung gehalten wird, wird eine direkte Übermittlung der Vertikalbewegung bzw. der Stellung des Tastkörpers via einer Vertikalbewegung des beweglichen Teils auf den Stellungemesser ermöglicht.

Dadurch, dass sich die Führungseinrichtung zumindest teilweise radial außerhalb der lichten Kontur des wirksamen Kerns der Abscheideeinheit erstreckt, wird gewährleistet, daß der Abscheider keinen großen Platzbedarf in radialer Richtung aufweist.

Dass der Tastkörper von einem Schwimmer getragen ist, hat den Vorteil, daß der Tastkörper sich radial gleichmäßig über dem zur Verfügung stehenden Raum erstrecken kann und somit immer der höchste Pegel gemessen wird, unabhängig von möglicherweise vorliegenden Pegeloder Strömungschwankungen.

Unter dem wirksamen Kern einer Abscheideeinheit wird der Teil eines Abscheiders verstanden, in welchem die eigentliche Zerlegung des zugeführten Gemisches erfolgt.

Gemäß Anspruch 2 ist der radiale Platzbedarf des Sensors besonders klein.

Die Maßnahme nach Anspruch 3 hat den Vorteil, daß der Stellungsmesser ohne Über- oder Untersetzung mit der Bewegung des Tastkörpers zusammenarbeitet.

Gemäß Anspruch 4 ist die Führungseinrichtung so ausgebildet, daß die Bewegung des Tastkörpers im Wesentlichen vertikal erfolgt, wodurch der Tastkörper in seiner radialen Erstreckung nur durch die ihn umgebende Wand begrenzt wird.

Die Weiterbildung gemäß Anspruch 5 bietet den Vorteil einer einfachen Wartung der Getriebeeinheit.

Die Maßnahme nach Anspruch 6 ermöglicht eine Parallelführung des Geberteiles.

Die Weiterbildung nach Anspruch 7 bietet den Vorteil einer einfachen und kostengünstigen Ausbildung der Gelenke.

Gemäß Anspruch 8 ist eine einfache und kostengünstige Ausbildung der raumfesten Gelenke möglich.

Durch die Maßnahme nach Anspruch 9 wird eine gute Parallelführung des Geberteils bei geringen Abmessungen der Getriebeeinheit ermöglicht.

Gemäß Anspruch 10 bleibt die radiale Abmessung der Getriebeeinheit insgesamt gering.

Mit der Weiterbildung der Erfindung gemäß Anspruch 11 erfolgt die Vertikalbewegung des Geberteils vollständig parallel zur Achse des Sammelbehälters.

Die Maßnahme nach Anspruch 12 gewährleistet, daß das Geberteil nicht um die vertikale Achse verkippen kann.

Gemäß Anspruch 13 ist sichergestellt, daß das Geberteil nicht um die horizontale Achse verkippen kann.

Die Weiterbildung nach Anspruch 15 ermöglicht es, daß der Tastkörper sich ohne Berührung des Pumpkonus der Abscheideeinheit bewegen kann.

Durch die Maßnahme nach Anspruch 16 wird das von einem Speibecken zugeführte Feststoff-beladene Speiwasser in Richtung des Zwischenraumes zwischen der Innenwand des Feststoffbehälters und der Außenwand des Schwimmers geleitet.

Gemäß Anspruch 17 wird gewährleistet, daß das Geberteil ohne Spiel der Bewegung des Tastkörpers folgt.

Nach Anspruch 18 ist eine dichte Durchführung der Verbindung durch die Wand des Feststoff-Sammelbehälters vorgesehen.

Die Weiterbildung der Erfindung gemäß Anspruch 19 ermöglicht eine sichere Abdichtung der Verbindungsstange des Pegelfühlers ohne nennenswerte Beeinflussung ihrer Beweglichkeit.

Dabei ist gemäß Anspruch 20 im Hinblick auf eine saubere Zentrierung des Dichtbalges auf die Verbindungsstange bei Erhalt ihrer leichten Beweglichkeit von Vorteil.

Mit der Maßnahme gemäß Anspruch 21 wird eine gute axiale Positionierung der Gleitführungsscheiben im Dichbalg erhalten, ohne daß hierfür zusätzliche Befestigungsmittel erforderlich wären.

Die Weiterbildung nach Anspruch 22 dient der berührungsfreien Messung der vertikalen Position des Schwimmers, der somit Pegeländerungen zuverlässig folgen kann.

Die Weiterbildung nach Anspruch 23 ermöglicht eine Messung von mindestens zwei vertikalen Positionen des Schwimmers.

Die Weiterbildung nach Anspruch 24 ermöglicht eine Messung von mehreren vertikalen Positionen des Schwimmers.

Gemäß dem Anspruch 25 kann der Abscheider vorteilhaft nur in Betrieb genommen werden, wenn der Feststoff-Sammelbehälter an der Abscheidevorrichtung angebracht ist.

Gemäß Anspruch 26 ist sichergestellt, daß der Abscheider nur in Betrieb genommen werden kann, wenn der Feststoff-Sammelnehälter ordnungsgemäß an der Abscheidevorrichtung angebracht ist, d.h. weder zu locker noch zu fest sitzt.

Die Weiterentwicklung nach Anspruch 27 dient der leichteren Abtrennung von Feststoffpartikeln aus einem durch den Festoff-Sammelbehälter strömenden Feststoff/Flüssigkeit-Gemisch.

Gemäß Anspruch 28 wird der Strom der Flüssigkeit unterhalb des Pumpenkonus beruhigt, was ein Absinken der Feststoffpartikel erleichtert.

Nachstehend wird die Erfindung unter Bezugnahme auf die Zeichnung näher erläutert. In dieser zeigen:
- Figur 1:: einen axialen Schnitt eines Abscheiders, welcher das an einem zahnärztlichen Arbeitsplatz anfallende Gemisch aus Flüssigkeit/Feststoffpartikeln/Luft in seine Bestandteile zerlegt, in welchem Einzelheiten einer Abscheideeinheit und eines Feststoff-Sammelbehälters gezeigt sind;
- Figur 2:: einen axialen Schnitt durch den von dem in Figur 1 gezeigten Abscheider getrennten Feststoff-Sammelbehälter mit einem Tastkörper und einem mit dem Tastkörper zusammenarbeitenden Stellungsmesser;
- Figur 3:: eine Aufsicht auf den in Figur 2 bezeichneten Feststoff-Sammelbehälter;
- Figur 4:: eine Explosionsansicht des Tastkörpers und des mit ihm zusammenarbeitenden Stellungsmessers;
- Figur 5:: eine Explosionsansicht einer Führungseinrichtung für den Tastkörper;
- Figur 6:: eine Aufsicht auf die in Figur 5 gezeigte Führungseinrichtung;
- Figur 7:: eine perspektivische Ansicht einer abgewandelten Führungseinrichtung;
- Figur 8:: eine Explosionsansicht der abgewandelten Führungseinrichtung nach Figur 7;
- Figur 9:: eine perspektivische Ansicht eines weiter abgewandelten Sediment-Pegelfühlers;
- Figur 10:: eine gegenüber Figur 9 um 90° gedrehte auseinandergezogene perspektivische Darstellung; und
- Figur 11:: einen axialen Schnitt durch einen Amalgamabscheider, in welchen ein Sediment-Pegelfühler nach Figur 9 und 10 eingebaut ist.

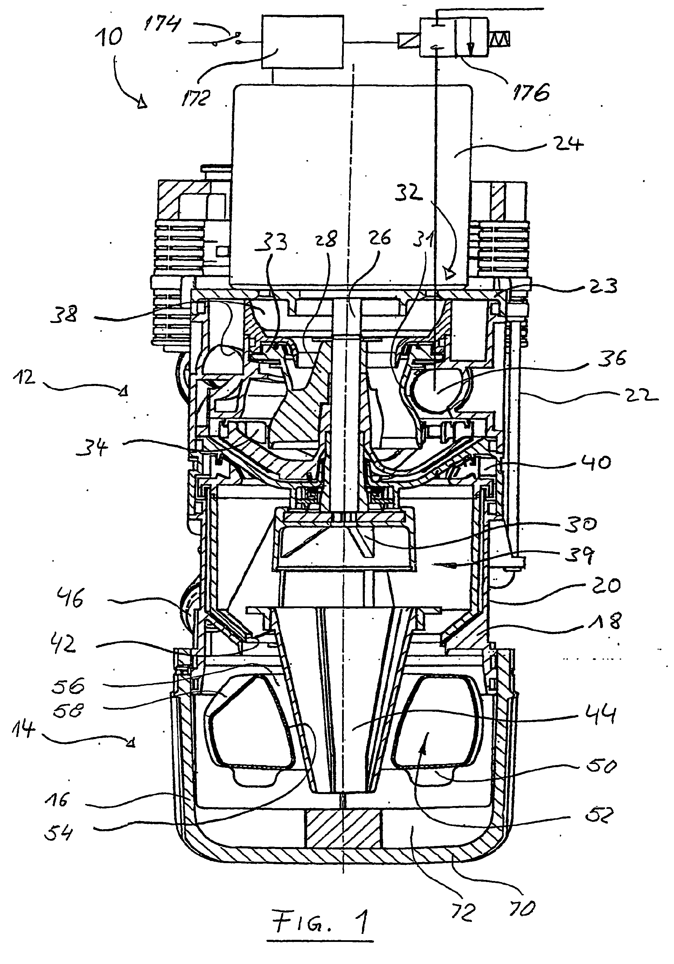

Figur 1 zeigt einen Abscheider 10 zum Zerlegen von Abwasser, welches Feststoffpartikel enthält und/oder aus einem Gemisch aus Flüssigkeit/Feststoffpartikeln/Luft besteht, wie es z.B. an einem zahnärztlichen Arbeitsplatz anfällt.

Der Abscheider 10 weist eine Abscheideeinheit 12 zum Zerlegen des Abwassers und einen becherförmigen Feststoff-Sammelbehälter 14 zum Aufnehmen von aus dem Abwasser abgeschiedenen Feststoffpartikeln, insbesondere Amalgampartikeln, auf.

Der Sammelbehälter 14 ist an der Oberkante seiner in Umfangsrichtung verlaufenden Wand 16 flüssigkeitsdicht mit der Unterkante einer in Umfangsrichtung verlaufenden Wand 18 eines unteren Gehäuseabschnittes 20 der Abscheideeinheit 12 verbunden. Eine solche dichte Verbindung läßt sich durch alle bekannten dichtenden Verbindungsmittel gewährleisten, z.B. durch Verschraubung oder einen einfachen Schnappmechanismus mit Dichtring.

Die Abscheideeinheit 12 weist ein mehrteiliges Gehäuse mit dem unteren Gehäuseabschnitt 20 und einem oberen Gehäuseabschnitt 22 auf. Auf dem oberen Gehäuseabschnitt 22 sitzt ein elektrischer Antriebsmotor 24, an dessen Welle 26 radiale Flügel 28, 30 und Dichtflügel 33, 34 angebracht sind, die somit durch den Antriebsmotor 24 in Rotation versetzt werden können.

Die Flügel 28 sind an ihren radial außenliegenden Kanten mit der Innenseite einer umlaufenden Wand 31 verbunden, so daß sich diese mit den Flügeln 28 bei Betrieb des Motors 24 dreht.

Die Flügel 28, 33, 34 und die umlaufende Wand 31 ergeben ein Separatorteil 32.

Durch einen Gemischeinlaßkanal 36 tritt das in seine Bestandteile zu zerlegende Abwasser in die Abscheideeinheit 12 ein. Die in dem Abwasser enthaltene Flüssigkeit wird im oberen Abschnitt der Abscheideeinheit 12 durch die Rotation der Flügel 28 gegen die Innenseite der umlaufenden Wand 31 gedrängt und dadurch von vorhandener Luft getrennt. Die abgetrennt Luft wird durch einen Luftauslaß 38 abgeführt.

Die Dichtflügel 33, 34 dichten die umlaufende Wand 31 des Separatorteiles 32 flüssigkeitsmäßig gegen das Gehäuseteil 22 und einen oberen Deckel 23 desselben ab.

Die unten an der Welle 26 angebrachten Flügel 30 sind von einer Zentrifugentrommel 39 umgeben.

Das Abwasser wird in diesem unteren Abschnitt der Abscheideeinheit 12 durch Zentrifugieren weiter von den noch enthaltenen Feststoffpartikeln getrennt. Das dabei erhaltene Reinwasser wird über einen Reinwasserauslaß 40 abgeführt.

Feststoffpartikel-angereicherte Flüssigkeit läuft bei Anhalten der Zentrifugentrommel 39 durch eine untere Trommelöffnung 42 der Zentrifugentrommel 39 in den Feststoffsammelbehälter 14.

Beim Ruhen der Feststoff-beladenen Flüssigkeit im Feststoff-Sammelbehälter 14 setzen sich auf Grund der Schwerkraft Feststoffpartikel am Boden des Sammelbehälters 14 ab.

In Höhe der Trommelöffnung 42 mündet ein Speiwassereinlaß 46 ins Innere des die Zentrifugentrommel umschließenden Gehäuseteiles 20. Durch diesen wird von der Speischale (nicht gezeigt) her anfallendes Speiwasser in die Abscheideeinheit eingebracht. Das Speiwasser fließt in den Behälter 14 und wird von einem Pumpenkonus 44 durch die Trommelöffnung 42 ins Innere der Zentrifugentrommel 39 gefördert. Dies hat den Vorteil, daß sich größere Feststoffpartikel, die im Speiwasser vorliegen, direkt in dem Sammelbehälter 14 absetzen können.

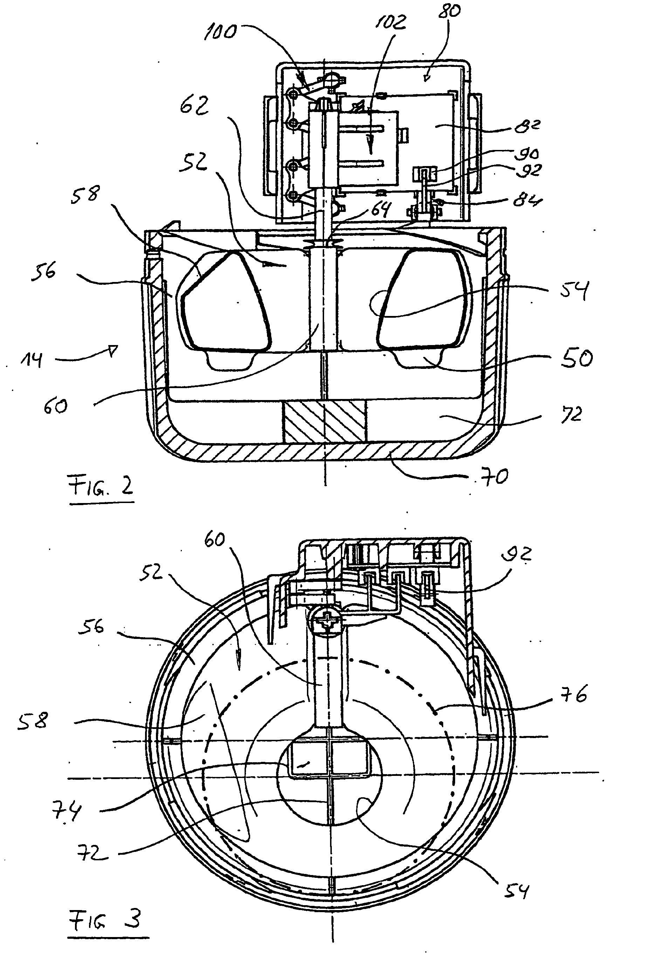

Figur 2 zeigt einen axialen Schnitt durch und Figur 3 eine Ansicht auf den Feststoff-Sammelbehälter 14 mit einem Sediment-Tastkörper 50 und einem mit dem Tastkörper 50 zusammenarbeitenden Stellungsmesser 80. Der Tastkörper 50 ist an der dem Boden des Feststoff-Sammelbehälters 14 zugewandten Seite eines Schwimmers 52 angeordnet.

Bei dem in Figur 2 gezeigten Ausführungsbeispiel ist der Schwimmer 52 ein toroidähnlicher Hohlkörper. Auch andere Formen eines schwimmfähigen Körpers sind geeignet. Der Schwimmer 52 weist einen axial konturierten Durchgang 54 auf, dessen Achse auf der Achse des Pumpkonus 44 der Abscheideeinheit 12 liegt.

Der größere Durchmesser des Durchgangs 54 liegt auf der vom Boden des Feststoff-Sammelbehälters 14 abgewandten Seite des Schwimmers 52, wobei die Kontur des Durchgangs 54 der lichten Außenkontur des Pumpenkonus 44 angepaßt ist. Der Durchmesser des Schwimmers 52 ist so gewählt, daß zwischen der Außenbegrenzung des Schwimmers 52 und der Innenwand des Sammelbehälters 14 ein geeigneter Zwischenraum 56 verbleibt, um ein ungehindertes Auf- und Abbewegen des Tastkörpers 50 zu gewährleisten.

Der Schwimmer 52 weist auf der dem Boden des Sammelbehälters 14 abgewandten Seite eine schräg nach innen ansteigende Abflachung 58 auf, welche unter der eine Festfraktions-Auslaßöffnung darstellenden Trommelöffnung 42 liegt.

Der auf der dem Boden des Sammelbehälters 14 zugewandten Seite des Schwimmers 52 angeordneten Tastkörper 50 umfasst vier in Umfangsrichtung verteilte Erhebungen der Schwimmerunterseite, um mit dem wie unten beschrieben ausgebildeten Boden des Sammelbehälters 14 zusammenzuwirken.

Der Schwimmer 52 ist über einen aufgerasteten Verbindungsbügel 60 mit einer hohlen Stange 62 verbunden, welche sich von dem Schwimmer ausgehend nach oben erstreckt. Die Stange 62 trägt über der Oberseite des Tastkörpers 14 eine verformbare Dichtung 64 mit ein liegendes V bildenden Dichtlippen, die mit einer Stangendurchführung eines nicht dargestellten Halteflansches des Gehäuseteiles 20 zusammenarbeitet.

Der Feststoff-Sammelbehälter 14 weist auf der Innenseite seiner Bodenfläche 70 ein Äbstandsrippenanordnung aus Abstandsrippen 72 auf, deren Mittelflächen die Mittelachse des Sammelbehälters 14 schneiden. Weiter weist die Abstandsrippenanordnung die ein Quadrat bildenden Abstandsrippen 74 auf. Der Mittelpunkt des Quadrates liegt ebenfalls auf der Mittelachse der Abscheideeinheit 12.

Die Abstandsrippen 72 und 74 geben die unterste Stellung des Schwimmers 52 vor und bilden zugleich das Sedimentieren begünstigende beruhigende Teilbereiche im unteren Abschnitt des Sammelbehälters 14.

In Figur 3 zeigt ein gestrichelter Kreis 76 idealisiert die lichte Kontur der Abscheideeinheit 12 des vorliegenden Ausführungsbeispieles. Der Stellungsmesser 80 liegt somit radial außerhalb der lichten Kontur des wirksamen Kerns der Abscheideeinheit 12, wobei die lichte Kontur nicht zwangsläufig kreisförmig sein muß.

Der wirksame Kern des hier beschriebenen Ausführungsbeispieles umfasst das Separatorteil 32, welches die Pumpflügel 28, die die Pumpflügel umgebende umlaufende Wand 31 und die Dichtflügel 33, 34 umfasst, sowie die Zentrifugentrommel 39.

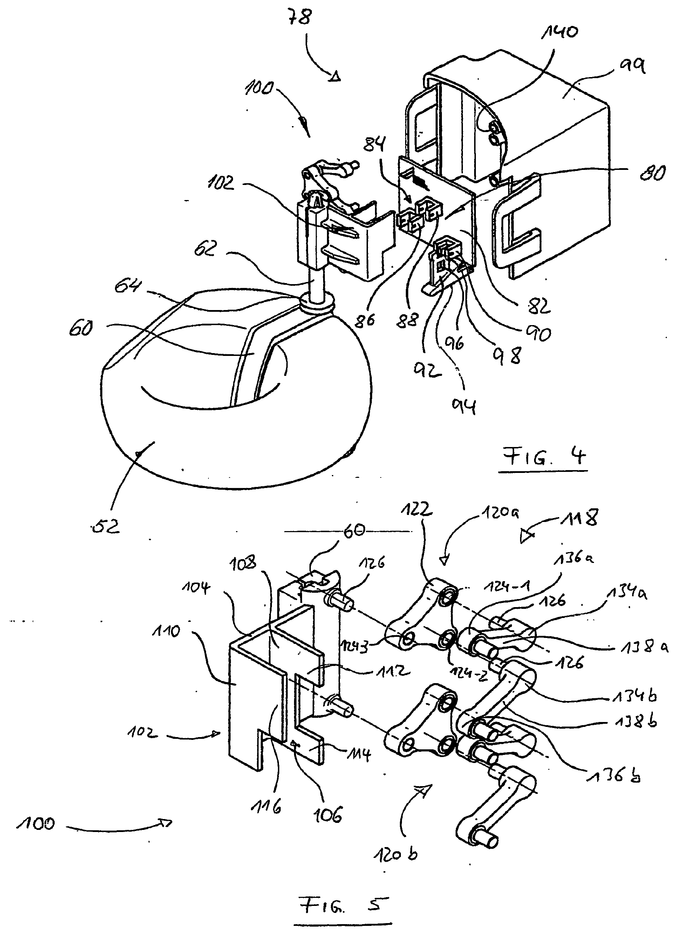

In Figur 4 ist eine Ausführungsform einer Pegelmeßeinheit insgesamt mit 78 bezeichnet. Der Stellungsmesser 80 umfaßt eine Platte 82, die eine Sensoranordnung 84 trägt. Die Sensoranordnung umfaßt drei Lichtschranken 86, 88 und 90, diese sind in axialer Richtung der Abscheideeinheit 12 versetzt auf der der Mittelachse der Abscheideeinheit 12 zugewandten Seite der Platte 82 angeordnet.

Die Lichtschranke 90 ist derart auf der Platte 82 angeordnet, daß sie mit einer Kontrollfahne 92 eines beweglichen Deckelkontroll-Geberteils 94 zusammenarbeitet, welches mit der Oberkante des Sammelbehälters 14 zusammenspielt. Die Kontrollfahne 92 weist eine Öffnung 96 und eine Ausnehmung 98 auf.

Der Abscheider 10 ist durch entsprechende Ausbildung seiner hier nicht näher beschriebenen Steuerung nur in Betrieb zu nehmen, wenn der zwischen der Öffnung 96 und der Ausnehmung 98 gebildete Steg den Lichtstrahl der Lichtschranke 90 unterbricht. Bei Entfernung des Sammelbehälters 14 bewegt sich die Kontrollfahne 92 in Richtung des Bodens des Sammelbehälters 14, so daß die Ausnehmung in den Lichtstrahl kommt, wodurch diesem ein freier Durchgang ermöglicht wird. Dies führt zu einem Signal, welches das Arbeiten des Abscheiders unterbricht bzw. einen Betrieb verhindert.

Wird der Sammelbehälter 14 falsch an der Abscheideeinheit 12 angebracht, z.B. durch Verkanten, so daß die Kontrollfahne 92 nach oben gedrückt wird und sich auf Grund dieser Stellung der Kontrollfahne 92 die Öffnung 96 in dem Lichtstrahl befindet, führt dies, bedingt durch den freien Durchgang des Lichtstrahles in der Lichtschranke 90, ebenfalls zu dem oben beschriebenen Signal und einer Unterbrechung des Betriebs der Abscheideeinheit 12.

Figur 5 zeigt eine Detailansicht einer Schwimmer-Führungseinrichtung 100, welche ein Teil der Pegelmeßeinheit 78 ist. Die Führungseinrichtung 100, weist ein bewegliches Teil 102 auf. Das bewegliche Teil 102 umfasst das Verbindungsmittel 60, durch welchen die Stange 62, die den Schwimmer 52 mit dem Teil 102 verbindet, befestigt wird. Ferner umfasst das bewegliche Teil 102 ein Geberteil 104, welches sich aus einer Fahnenanordnung 106 den mit dieser Fahnenanordnung 106 zusammenarbeitenden Lichtschranken 86, 88, die in Figur 4 gezeigt sind, zusammensetzt.

Die Fahnenanordnung 106 weist einen ersten und einen zweiten parallel zur Achse des Sammelbehälters 14 verlaufende Fahnenträger 108, 110 auf, welche Fahnen tragen. Der erste Fahnenträger 108 trägt eine obere Fahne 112 sowie eine untere Fahne 114. Der zweite Fahnenträger 110 trägt eine Fahne 116, welche sich, ausgehend von der Höhe der Oberkante der oberen Fahne 112, bis über die Unterkante der Fahne 112 hinaus erstreckt. erstreckt.

Diese Fahnenanordnung 106 in Verbindung mit den in Figur 4 gezeigten Lichtschranken 86, 88 ergibt, je nach axialer Stellung der Fahnen 112, 114, 116 in Bezug auf die Lichtschranken 86, 88, vier Signalkombinationen.

Ist der Sammelbehälter 14 leer oder nur wenig gefüllt, unterbricht die Fahne 112 den Lichtstrahl der Lichtschranke 86, wogegen der Lichstrahl der Lichtschranke 88 nicht unterbrochen ist und die Lichtschranke 88 ein Signal erzeugt. Somit ergibt sich bei einem tiefen Pegelstand die Signalkombination der Lichtschranken 86, 88 von 0/1. Dabei bedeutet 1, daß der Lichtweg der entsprechenden Lichtschranke nicht unterbrochen ist und 0, daß der Lichtweg der entsprechenden Lichtschranke unterbrochen ist.

Steigt der Pegel der Flüssigkeit in dem Feststoff-Sammelbehälter 14 an, führt dies zunächst zu der Signalkobination 1/1 und weiter zu der Signalkombination 0/0. Bei letzterer wird der Lichtdurchgang der Lichtschranke 86 durch die untere Fahne 114 des Fahnenträgers 108 und derjenige der Lichtschranke 88 durch die Fahne 116 des Fahnenträgers 110 unterbrochen.

Diese Zwischenpegel können z.B. durch das Leuchten von entsprechend geschalteten Leuchtdioden visualisiert werden, so daß das Personal über den Pegelstand informiert ist, um ein rechtzeitiges Leeren des Feststoff-Sammelbehälters 14 zu gewährleisten.

Steigt der Pegel nämlich weiter an, führt dies zu der Signalkombination 1/0, d.h. die Fahne 114 steht über der Lichtschranke 86 und die Fahne 116 unterbricht den Lichtweg der Lichtschranke 88. Dies zeigt den Pegelhöchststand an und die Abscheideeinheit 12 wird abgeschaltet.

Da ein Abschalten der Abscheideeinheit 12 während der Behandlung eines Patienten vermieden werden sollte, ist es vorteilhaft, über den Stand des Pegels innerhalb des Feststoff-Sammelbehälters 14 in der oben dargelegten Weise informiert zu sein, um den Feststoff-Sammelbehälter rechtzeitig entleeren zu können.

Die Führungseinrichtung 100 weist ein Hebelgetriebe 118 auf, welches zwei Getriebeeinheiten 120a, 120b umfasst. Wo nachstehend auf beide Getriebeeinheiten und ihre Bestandteile gleichermaßen Bezug genommen wird, fallen die Ergänzungen "a" bzw. "b" weg.

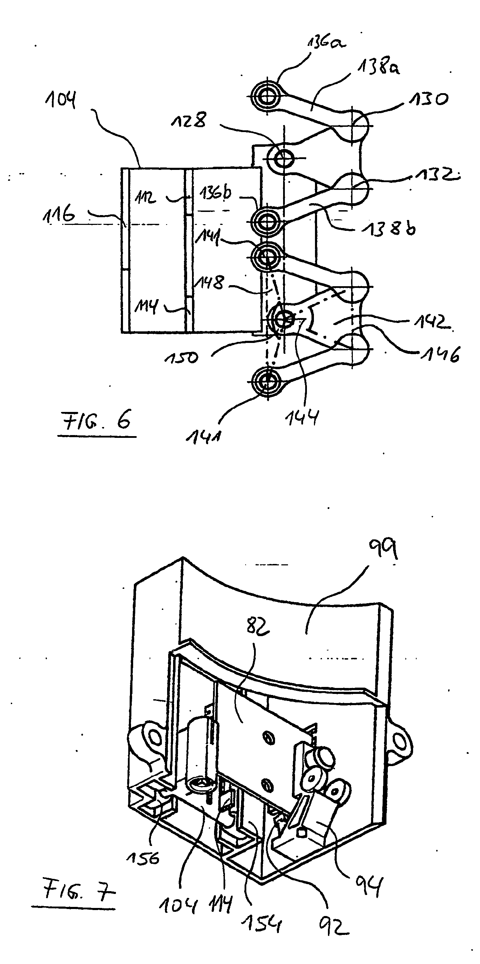

Die Getriebeeinheiten 120 umfassen jeweils eine Hebelplatte 122, welche drei Lagerbohrungen 124-1, 124-2, 124-3 aufweist. Diese Lagerbohrungen arbeiten mit komplementären Lagerzapfen 126 paarweise zusammen und bilden so Gelenke 128, 130 und 132 (vgl. Figur 6). Das geberteilseitige Gelenk 128 verbindet die Hebelplatte 122 mit dem Geberteil 104. Die beiden lenkerseitigen Gelenke 130, 132 verbinden jeweils die Hebelplatte 122 mit beweglichen ersten Enden 134a, b zweier Lenkerarme 138a, b.

Die Lagerzapfen können auch auf der Hebelplatte liegen, dann weisen die Lenkerarme entsprechend komplementäre Bohrungen auf.

Die Lenkerarme 138a, b sind an ihren zweiten Enden 136a, b raumfest gelagert. Diese Lagerung erfolgt über zu den Lagerzapfen 126 an den Enden 136 komplementäre Lagerbohrungen 140, welche an der Innenwand eines Stellungsmesser-Gehäuses 99 angeordnet sind, wie in Figur 4 gezeigt ist.

Auch hier können Lagerzapfen und Lagerbohrungen vertauscht sein.

Figur 6 zeigt eine bevorzugte Geometrie der Führungseinrichtung 100 in einer Aufsicht in Richtung der Mittelachse des Sammelbehälters 14 gesehen in zur Achse des Sammelbehälters senkrechten Richtung.

Die Gelenke 128, 130, 132 sind derart angeordnet, daß sie ein erstes gleichschenkliges Dreieck 142 bilden, wobei das geberteilseitige Gelenk 128 bei der Spitze des ersten Dreiecks liegt, während die lenkerseitigen Gelenke 130, 132 bei der Basis des ersten Dreieckes liegen. Der Öffnungswinkel 144 dieses ersten gleichschenkligen Dreiecks 142 beträgt vorzugsweise etwa 52°.

Ist nun die Hebelplatte 122 derart ausgerichtet, daß eine den geberteilseitigen Gelenk 128 gegenüberliegende Seite 146 des ersten Dreiecks 142 parallel zur Achse des Sammelbehälters 14 verläuft, bildet das geberteilseitige Gelenk 128 für die Enden 136 der Lenkerarme 138a, b ein zweites gleichschenkliges Dreieck 148. Das geberteilseitige Gelenk 128 liegt bei der Spitze des zweiten Dreiecks 148, während die raumfesten Gelenke für die Enden 136 bei der Basis des zweiten Dreiecks liegen. Der Öffnungswinkel 150 des zweiten gleichseitigen Dreiecks 148 liegt bei vorzugsweise etwa 152°.

Die Länge der Lenkerarme 138a, b und der Abstand der der Lagerbohrungspaare 124-1/124-3 bzw. 124-2/124-3 beträgt vorzugsweise etwa 11 mm, der Abstand der lenkerseitigen Lagerbohrungen 124-1 und 124-2 der Hebelplatte 122 beträgt vorzugsweise etwa 8 mm und der Abstand der raumfesten Gelenke bei den Enden 136 der Lenkerarme 138 beträgt vorzugsweise etwa 16 mm.

Bei dieser Geometrie der Führungseinrichtung 100 wird gewährleistet, daß die durch die Vertikalbewegung bedingte Horizontalbewegung des Geberteils 104 im wesentlichen Null ist, wodurch der über den Schwimmer 52 mit dem Geberteil 104 verbundenen Tastkörper 50 im wesentlichen parallel zur Achse des Sammelbehälters 14 geführt wird.

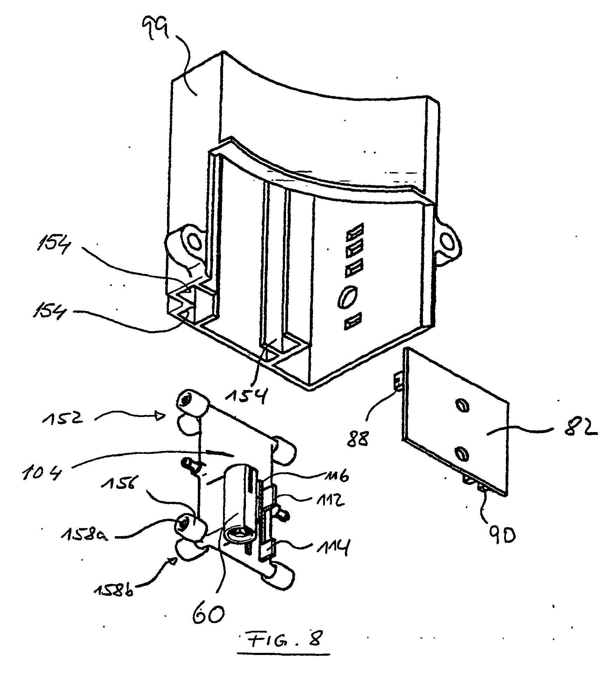

Die Figuren 7 und 8 zeigen ein alternatives Ausführungsbeispiel der Führungseinrichtung 100.

Das Geberteil 104 weist zylindrische seitlich überstehende Rollen 152 auf, die in parallel zur Achse des Sammelbehälters 14 angeordneten passenden Führungsschienen 154 verlaufen.

Gemäß Figur 7 sind die Rollen 152 an dem Geberteil 104 gelagert, während die Führungsschienen 154 innerhalb des Gehäuses 99 angeordnet sind. Man kann Rollen und Führungsschienen aber auch vertauschen.

Die Rollen 152 weisen einen Rollenkörper 156 auf, der von einer Rollenachse 158 getragen wird. Bei mit 158a bezeichneten Rollenachachsen stehen die Achsen parallel zur Ebene des plattenförmigen Geberteils 104, während bei anderen Rollenachsen 158b die Achse senkrecht zur Ebene des Geberteiles 104 steht.

Um eine Kipp-Stabilität des Geberteiles 104 zu gewährleisten, müssen mindestens vier Rollen 152 in mindestens zwei Führungsschienen 154 laufen. Beim Ausführungsbeispiel nach den Figuren 1 bis 8 weist die Führungseinrichtung 100 sechs Rollen 152 auf, die in drei passenden Führungsschienen 154 laufen. Die Führungsschienen sind vorzugsweise Mehrwandprofil-Schienen, die die Rollen in den zur Führungsrichtung senkrechten Richtungen positionieren.

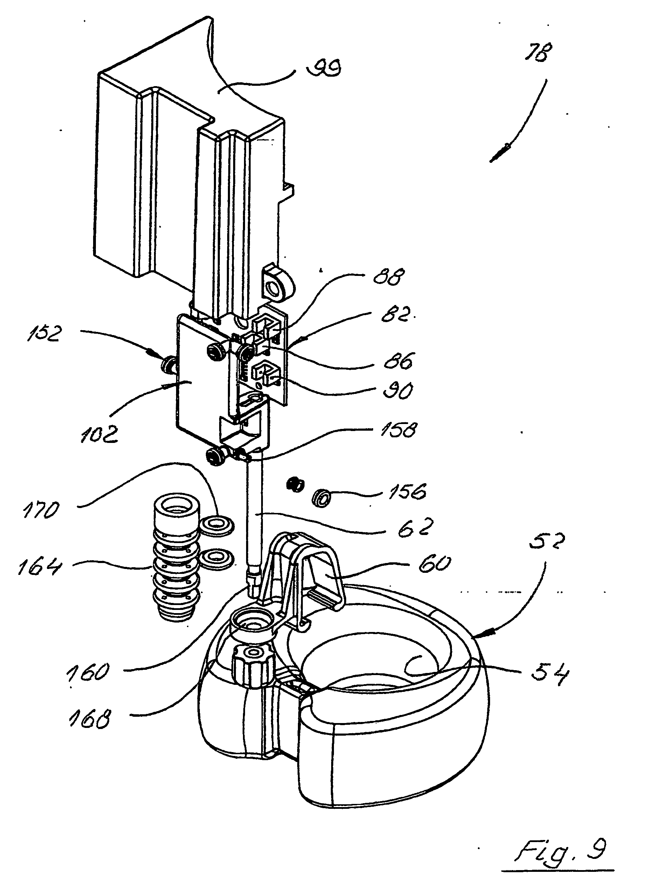

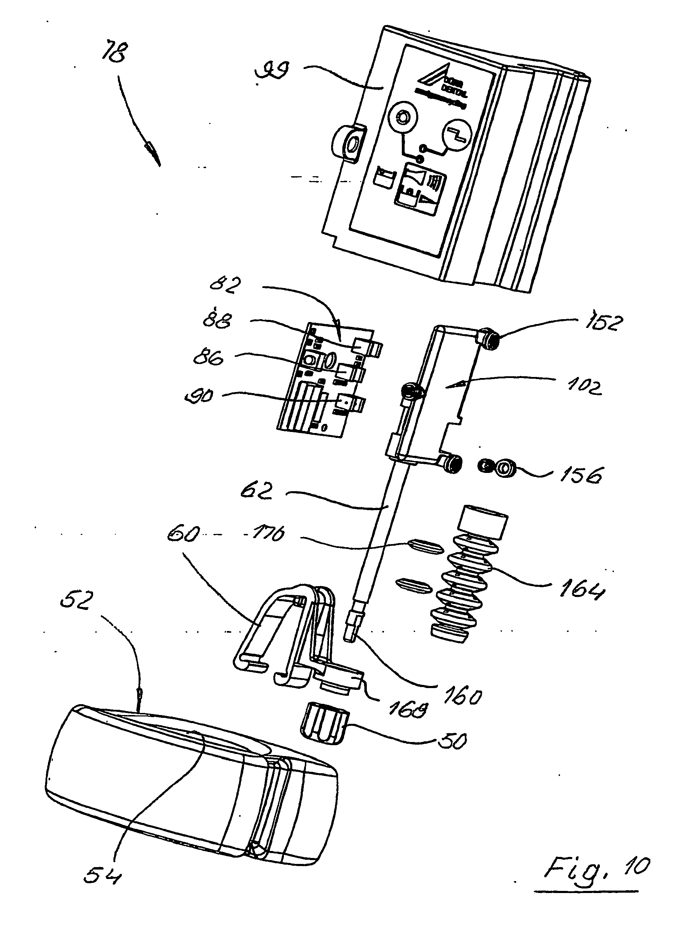

Beim Ausführungsbeispiel nach den Figuren 9 bis 11 ist staat zweier der Rollen 152, die bei den Enden einer der Seiten des Geberteiles 104 angeordnet sind eine Rolle 152 vorgesehen, die bei der Mitte dieser Seite vorgesehen ist. Die Führungsschienen 154 sind unverändert. Eine solche Führungseinrichtung arbeitet genauso wie die jenige nach den Figuren 7 und 8.

Beim Ausführungsbeispiel nach den Figuren 9 bis 11 ist ferner die Unterseite des Schwimmers 52 glatt. Der Sediment-Tastkörper 50 ist als hutförmiges Teil ausgebildet, welches auf einen mit Gewinde versehenen Endabschnitt 160 der Verbindungsstange 62 aufgeschraubt ist.

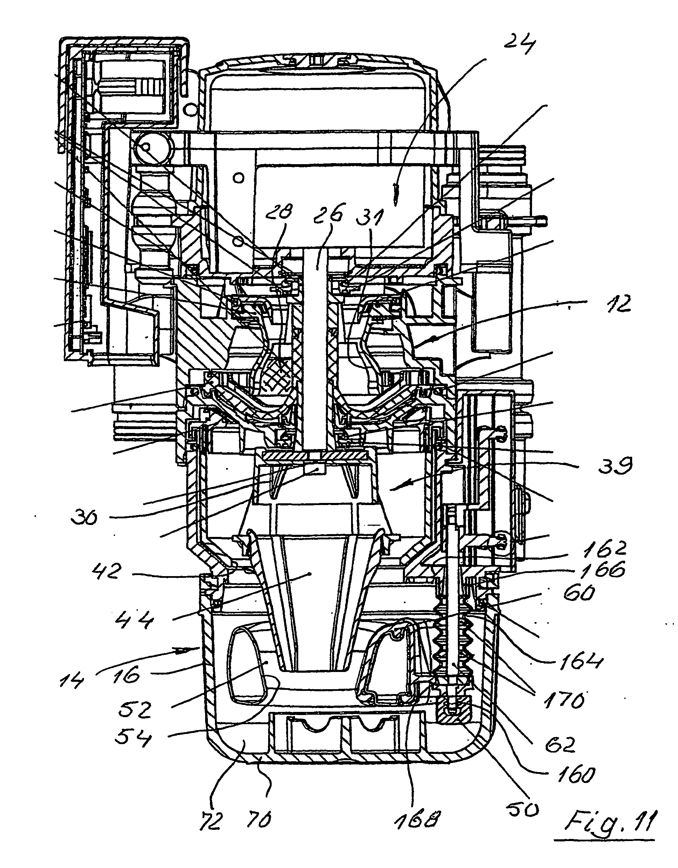

Ein weiterer Unterschied zu den anderen Ausführungsbeispielen besteht darin, daß zum Abdichten der Durchführungsstelle der Verbindungsstange 62 durch eine horizontale Montagewand 162 des Gehäuseabschnittes 20 ein Dichtbalg 164 vorgesehen ist. Dessen eines Ende ist, wie aus Figur 11 ersichtlich, dicht auf einen Durchführstutzen 166 der Montagewand 162 aufgesetzt. Sein anderes Ende ist dicht mit einem Befestigungsauge 168 des Verbindungsbügels 60 verbunden, über welches letzterer mit der Verbindungsstange 62 verbunden ist.

In die zweite und vierte Wellung des Dichtbalges 164 ist jeweils ein Gleitpositionierscheibe 170 eingesetzt. Diese hat einen Innendurchmesser, der geringfügig größer ist als der Außendurchmeeser der Verbindungsstange 62, und eine Außenkontur, welche der Innenkontur einer Wellung angepaßt ist. Auf diese Weise kann eine Gleitpositionierscheibe auf einfache Weise in fester axialer Stellung im Dichtbalg 164 gehalten werden, ohne daß zusätzliche Haltemittel notwendig wären. Die Gleitpositionierscheiben 170 sind aus einem Kunststofmaterial niederer Reibung gefertig, z.B. aus Polyamid.

Eine leichte Beweglicheit der durch den Schwimmer 52 bewegten Teile ist deshalb vorteilhaft, weil man dann mit einem kleinen Schwimmer auskommen kann, was sich auf die Baugröße des gesamten Abscheiders günstig auswirkt.

Typischerweise erzeugt ein Schwimmer, der unter radialem

Spiel, wie gezeigt, in einem Sammelbehälter mit einem Innendurchmesser von ca 90 mm Aufnahme findet, einen Auftrieb von etwa 100 g. Die durch de Schwimmer zu bewegenden Teile haben ein Gewicht von etwa 60 g. Um ein sicheres Schaltverhalten zu gewährleisten, muß die Reibung im gesamten System daher möglichst klein gehalten werden, was mit den oben beschriebenen Konstruktionen möglich ist, wobei sich die nach den Figuren 9 bis 11 durch besonders niedere Reibung auch im Dauerbetrieb unter den im Sammelbehälter 14 herrschenden Bedingungen auszeichnet.

Der oben beschriebene Pegelfühler 78 für einen Sammelbehälter eines Amalgamabscheiders umfaßt somit ein leicht bewegliches Geberteil 102 eines Stellungsmessers in Form einer Platte mit fünf Rolleneinheiten 152, welche zusammen mit einer Mehrkanal-Führungsschiene 99 das Geberteil 102 in drei zu einander senkrechten Richtungen führt. Eine dichte Durchführung einer das Geberteil 102 mit dem Schwimmer 52 verbindenden Verbindungsstange 62 umfaßt den Dichtbalg 164, dessen eines Ende an der Gehäusewand 162 und dessen anderes Ende an einer von der Durchführstelle der Verbindungsstange 162 durch die Gehäusewand entfernten Stelle der Verbindungsstange 62 festgelegt ist, nämlich beim Befestigungsauge 168.

Den oben beschriebenen Pegelfühlern ist gemeinsam, daß sie verschiedene Aufgaben erfüllen können:
- Detektion des Zulaufes von Wasser in den Sammelbehälter;
- Überwachung des Sedimentpegels im Sammelbehälter;
- Korrekte Anbringung des Sammelbehälters (Bei leerem korrekt aufgestztem Sammelbehälter wird der Schwimmer durch den Sammelbehälter etwas angehoben; bei fehlendem oder nicht korrekt aufsetztem Sammelbehälter fällt das Geberteil so weit, daß keine der Lichtschranken anspricht.);
- Vorhandensein, Dichtheit und korrekte mechanische Verbindung des Schwimmers mit dem Geberteil (Beim Anhalten des Abscheiders sinkt Wasser in den Sammelbehälter ab, und der Schwimmer muß dann ansteigen, wodurch sich eine Betätigung einer der Lichtschranken ergibt.).

Das Ausgangssignal der obersten Lichtschranke, welches ein Zulaufen von Wasser signalisisert kann, wie schon angesprochen, dazu dienen, den Antriebsmotor 24 des Abscheiders einzuschalten.

Für den Antriebsmotor 24 kann eine Steuerung 172, die in Figur 1 gestrichelt angedeutet ist, so ausgebildet sein, daß sie den Antriebsmotor 24 in Gang setzt, wenn ein Ablageschalter 174 durch Abnehmen einer Saugkanüle von der Ablage des Arbeitsplatzes betätigt wird und ein Startsignal abgibt.

Erst wenn der Antriebsmotor 24 eine vorgegebene Drehzahl erreicht hat, bei welcher eine ausreichend gutes Arbeiten des Abscheiders gewährleistet ist, schaltet die Steuerung 172 dann ein Platzwahlventil 176 in die Offenstellung, über welches der Gemischeinlaßkanal 36 mit der Saugkanüle verbunden ist.

Wird die Saugkanüle wieder auf die Ablage zurückgelegt, ändert der Ablageschalter 174 wieder sein Ausgangssignal und die Steuerung 172 schließt sofort das Platzwahlventil 176 und hält dann den Antriebsmotor 24 an.

## Patentansprüche

1. Sedimentpegelfühler für einen Feststoff-Sammelbehälter (14) eines Abscheiders (10) von Feststoffpartikeln aus einer Flüssigkeit, insbesondere dem Abwasser eines dentalen Arbeitsplatzes, mit einem Sediment-Tastkörper (50) und 10 mit einem mit dem Tastkörper (50) zusammenarbeitenden Stellungsmesser (80), wobei der Tastkörper (50) durch das bewegliche Teil (102) einer Führungseinrichtung (100) gehalten ist, **dadurch gekennzeichnet, dass** der Tastkörper (50) von der Unterseite eines Schwimmers (52) getragen ist.

2. Sedimentpegelfühler nach Anspruch 1, **dadurch gekennzeichnet, dass** der Schwimmer (52) ein Toroid-ähnlicher Hohlkörper ist.

3. Sedimentpegelfühler nach Anspruch 2, **dadurch gekennzeichnet, dass** das bewegliche Teil (102) der Führungseinrichtung (100) ein Geberteil (104) des Stellungsmessers (80) bewegt.

4. Sedimentpegelfühler nach Anspruch 3, **dadurch gekennzeichnet, dass** die Führungseinrichtung (100) einen ersten Lenkerarm (138) aufweist, der an einem Ende (136) raumfest gelagert ist und am anderen Ende (134) über ein Getriebe mit dem Geberteil (104) gekoppelt ist, wobei das Getriebe so ausgebildet ist, dass die Horizontalkomponente der Bewegung des freien Endes des ersten Lenkerarmes im wesentlichen kompensiert wird.

5. Sedimentpegelfühler nach Anspruch 4, **dadurch gekennzeichnet, dass** das Getriebe ein Hebelgetriebe (118) ist.

6. Sedimentpegelfühler nach Anspruch 5, **dadurch gekennzeichnet, dass** das Hebelgetriebe (118) zwei beabstandete Getriebeeinheiten (120) umfasst, die jeweils aufweisen: eine Hebelplatte (122) und drei Gelenke (128, 130, 132), wobei ein erstes Gelenk (128) die Hebeplatte (122) mit dem Geberteil (104) der Führungseinrichtung (100) verbindet, das zweite Gelenk die Hebelplatte (122) mit einem frei gelagerten ersten Ende (134a) eines ersten Lenkerarmes (138a) verbindet und das dritte Gelenk die Hebelplatte (122) mit einem frei gelagerten ersten Ende (134b) eines zweiten Lenkerarmes (138b) verbindet und wobei zweite Enden (136a, b) der Lenkerarme (138a, b) raumfest gelagert (141) sind.

7. Sedimentpegelfühler nach Anspruch 6, **dadurch gekennzeichnet, dass** die Gelenke (128, 130, 132) Lagerbohrungen (124-1, 124-2, 124-3) und zu den Lagerbohrungen komplementäre Lagerzapfen (126) aufweisen, die paarweise zusammenarbeiten und auf der Hebelplatte bzw. den Lenkerarmen angeordnet sind.

8. Sedimentpegelfühler nach Anspruch 6 oder 7, **dadurch gekennzeichnet, dass** die Gelenke für die raumfest gelagerten zweiten Enden der Lenkerarme Lagerbohrungen (140) und zu den Lagerbohrungen (140) komplementäre Lagerzapfen (126) aufweisen, die paarweise zusammenarbeiten und an einem Stellungsmesser-Gehäuse (99) bzw. den Lenkerarmen angeordnet sind.

9. Sedimentpegelfühler nach den Ansprüchen 6 bis 8, **dadurch gekennzeichnet, dass** die Gelenke (128, 130, 132) in der Weise angeordnet sind, dass sie ein erstes gleichschenkliges Dreieck (142) bilden, wobei der Öffnungswinkel (144) des ersten Dreiecks (142) 45 bis 60°, vorzugsweise etwa 52° beträgt und ein geberteilseitiges der Gelenke (128) bei der Spitze des ersten Dreiecks (142) liegt, während die lenkerseitigen Gelenke (130, 132) bei der Basis des Dreiecks (142) liegen.

10. Sedimentpegelfühler nach Anspruch 9, **dadurch gekennzeichnet, dass** das geberteilseitige Gelenk (128) bei einer Ausrichtung der Hebelplatte (122) derart, dass die den geberteilseitigen Gelenk (128) gegenüberliegende Seite (146) des ersten Dreiecks (142) parallel zur Achse des Sammelbehälters (14) liegt, mit den raumfesten Gelenken (130, 132) für die zweiten Enden des ersten und des zweiten Lenkerarmes (138a, 138b) ein zweites Dreieck (148) bildet, wobei der Öffnungswinkel (150) des zweiten Dreiecks (148) 140 bis 160°, vorzugsweise etwa 152° beträgt und das geberteilseitige Gelenk (128) bei der Spitze des zweiten Dreiecks liegt, während die raumfesten Gelenke (130, 132) für den ersten und den zweiten Lenkerarm (138a, 138b) bei der Basis des zweiten Dreiecks liegen, wobei vorzugsweise die Länge der Lenkerarme (138) 8 bis 15 mm, insbesondere etwa 11 mm, der Abstand der raumfesten Gelenke (141) für den ersten und den zweiten Lenkerarm 12 bis 18 mm, insbesondere etwa 16 mm und der Abstand der lenkerseitigen Gelenke (130, 132) auf der Hebelplatte (122) 6 bis 10 mm, insbesondere etwa 8 mm beträgt.

11. Sedimentpegelfühler nach Anspruch 3, **dadurch gekennzeichnet, dass** die Führungseinrichtung (100) mindestens zwei beabstandete Rollen (152) aufweist, die in mindestens einer parallel zur Achse des Sammelbehälters (14) angeordneten zu den Rollen komplementären Führungsschiene (154) laufen.

12. Sedimentpegelfühler nach Anspruch 11, **dadurch gekennzeichnet, dass** die Rollen einen Rollenkörper (156) und eine diesen Rollenkörper tragende Achse (158) aufweisen, wobei ein Teil der Rollenachsen (158) senkrecht zu der Führungsebene des Geberteils (104) steht, der andere Teil der Rollenachsen (158) parallel zu der Führungsebene des Geberteils (104) steht und die Führungsschienen (154) Mehrwandprofil-Schienen sind.

13. Sedimentpegelfühler nach Anspruch 12, **dadurch gekennzeichnet, dass** mindestens vier, vorzugsweise fünf Rollen (152) an dem Geberteil (104) angebracht sind und die Rollen in mindestens zwei, vorzugsweise drei Führungsschienen (154) verlaufen.

14. Sedimentpegelfühler nach einem der Ansprüche 1 bis 13, **dadurch gekennzeichnet, dass** der Tastkörper (50) vier in Umfangsrichtung verteilte Erhebungen der Schwimmerunterseite umfasst.

15. Sedimentpegelfühler nach einem der Ansprüche 1 bis 14, **dadurch gekennzeichnet, dass** der Schwimmer (52) einen axial konturierten Durchgang (54) aufweist, dessen Mittelpunkt auf der Achse eines Pumpkonus (44) der Abscheideeinheit (12) liegt, wobei der größere Durchmesser des Durchgangs (54) auf der den Boden (70) des Sammelbehälters (14) abgewandten Fläche des Schwimmers (52) liegt und der Durchgang der lichten Außenkontur des Pumpkonus (44) angepasst ist.

16. Sedimentpegelfühler nach Anspruch 15, **dadurch gekennzeichnet, dass** der Schwimmer (52) auf der dem Boden des Sammelbehälters (14) abgewandten Seite eine schräg zur Achse des Abscheiders (10) verlaufende Abflachung (58) hat, welche unterhalb einer Festfraktion-Auslaßöffnung (42) der Abscheideeinheit (12) angeordnet ist.

17. Sedimentpegelfühler nach einem der Ansprüche 14 bis 16, **dadurch gekennzeichnet, dass** der Schwimmer (52) mit dem Geberteil (104) durch eine vorzugsweise hohle Verbindungsstange (62) starr verbunden ist.

18. Sedimentpegelfühler nach Anspruch 17, **dadurch gekennzeichnet, dass** die Verbindungsstange (62) eine verformbare Dichtung (64) trägt, die mit einer Stangendurchführung eines Halteflansches für den Sammelbehälter zusammenarbeitet.

19. Sedimentpegelfühler nach Anspruch 17, **dadurch gekennzeichnet, dass** die Verbindungsstange (62) innerhalb eines Dichtbalges (164) angeordnet ist, dessen eines Ende an einem Gehäuseabschnitt (162) und dessen anderes Ende an einem von dem Gehäuseabschnitt (162) beabstandeten Abschnitt der Verbindungsstange (62) festgelegt ist.

20. Sedimentpegelfühler nach Anspruch 19, **dadurch gekennzeichnet, dass** mindestens eine Gleitpositionierscheibe (170) im Inneren des Dichtbalges (164) angeordnet ist.

21. Sedimentpegelfühler nach Anspruch 20, **dadurch gekennzeichnet, dass** die Außenkontur der Gleitpositionierscheibe (170) der Kontur der Wellung des Dichtbalges (164) angepaßt ist.

22. Sedimentpegelfühler nach den Ansprüchen 1 bis 21, **dadurch gekennzeichnet, dass** das Geberteil ein mindestens eine Geberfahne umfassende Fahnenanordnung (106) und eine mindestens einen Sensor umfassende Sensoranordnung (84) aufweist.

23. Sedimentpegelfühler nach einem der Ansprüche 1 bis 22, **dadurch gekennzeichnet, dass** die Fahnenanordnung (106) zwei parallel zur Achse des Sammelbehälters (14) verlaufende nebeneinander angeordnete Fahnenträger (108, 110) aufweist, welche Fahnen (112, 114, 116) tragen, die mit der Sensoranordnung zusammenarbeiten und in unterschiedlicher Höhe liegen.

24. Sedimentpegelfühler nach den Ansprüchen 1 bis 23, **dadurch gekennzeichnet, dass** die Sensoranordnung eine erste Lichtschranke (86), die mit den Fahnen (112, 114) des ersten Fahnenträgers zusammenarbeitet und eine zweite Lichtschranke (88), die mit der Fahne (116) des zweiten Fahnenträgers zusammenarbeitet, aufweist, wobei die erste Lichtschranke (86) in größerem Abstand zum Boden des Sammelbehälters angeordnet ist, als die zweite Lichtschranke (88).

25. Sedimentpegelfühler nach einem der Ansprüche 1 bis 24, **dadurch gekennzeichnet, dass** die Sensoranordnung (84) eine dritte Lichtschranke (90) aufweist, welche mit einer Kontrollfahne (92) eines Deckelkontroll-Geberteils (94) zusammenarbeitet, welches der Oberkante des Sammelbehälters (14) zusammenarbeitet.

26. Sedimentpegelfühler nach Anspruch 25, **dadurch gekennzeichnet, dass** die Kontrollfahne (92) eine Öffnung (96) und eine Ausnehmung (98) aufweist, die in Behälter-Aufsatzrichtung beabstandet sind.

27. Sedimentpegelfühler nach einem der Ansprüche 1 bis 26, **dadurch gekennzeichnet, dass** der Feststoff-Sammelbehälter (14) auf der Bodeninnenseite ein Abstandskreuz aus Abstandsrippen (72) trägt, deren Mittelflächen die Mittelachse des Sammelbehälters (14) schneiden.

28. Sedimentpegelfühler nach Anspruch 27, **dadurch gekennzeichnet, dass** der Feststoff-Sammelbehälter (14) auf der Bodeninnenseite ein Quadrat bildende weitere Abstandsrippen (74) trägt, dessen Mittelpunkt auf den Mittelpunkt des Abstandskreuzes aus den Abstandsrippen (72) liegt und dessen eine Schnittfläche mit einem der Abstandsrippen (72) des Abstandskreuzes auf der Mittelachse der Abscheideeinheit (12) liegt.

## Claims

1. Sediment level sensor for a solid matter collecting container (14) belonging to a separator (10) for separating particles of solid matter from a liquid, in particular the waste water of a dental workstation, said sensor having a sediment-sensing body (50) and having a position-measuring device (80) which cooperates with said sensing body (50), wherein said sensing body (50) is held by the movable part (102) of a guiding apparatus (100), **characterised in that** the sensing body (50) is carried by the underside of a float (52).

2. Sediment level sensor according to claim 1, **characterised in that** the float (52) is a toroid-like hollow body.

3. Sediment level sensor according to claim 2, **characterised in that** the movable part (102) of the guiding apparatus (100) moves a transmitter part (104) belonging to the position-measuring device (80).

4. Sediment level sensor according to claim 3, **characterised in that** the guiding apparatus (100) has a first guide rod arm (138) which is mounted in a spatially fixed manner at one end (136) and, at the other end, is coupled to the transmitter part (104) via a mechanism, wherein said mechanism is constructed in such a way that the horizontal component of the movement of the free end of the first guide rod is substantially compensated for.

5. Sediment level sensor according to claim 4, **characterised in that** the mechanism is a lever mechanism (118).

6. Sediment level sensor according to claim 5, **characterised in that** the lever mechanism (118) comprises two mechanism units (120) which are spaced apart and which each have: a lever plate (122) and three joints (128, 130, 132), wherein a first joint (128) connects the lever plate (122) to the transmitter part (104) of the guiding apparatus (100), the second joint connects the lever plate (122) to a first end (134a), which is mounted in a floating manner, of a first guide rod arm (138a), and the third joint connects the lever plate (122) to a first end (134b), which is mounted in a floating manner, of a second guide rod arm (138b), and wherein second ends (136a, b) of the guide rod arms (138a, b) are mounted in a spatially fixed manner.

7. Sediment level sensor according to claim 6, **characterised in that** the joints (128, 130, 132) have bearing bores (124-1, 124-2, 124-3) and bearing pins (126) which are complementary to said bearing bores and which cooperate in pairs and are arranged on the lever plate or on the guide rod arms.

8. Sediment level sensor according to claim 6 or 7, **characterised in that** the joints for the second ends, which are mounted in a spatially fixed manner, of the guide rod arms, have bearing bores (140) and bearing pins (126) which are complementary to said bearing bores and which cooperate in pairs and are arranged on the casing (99) of a position-measuring device (99) or on the guide rod arms.

9. Sediment level sensor according to claims 6 to 8, **characterised in that** the joints (128, 130, 132) are arranged in such a way that they form a first isosceles triangle (142), wherein the aperture angle (144) of the first triangle (142) is 45 to 60°, preferably about 52°, and one of the joints (128), which is on the transmitter part side, is located at the apex of the first triangle (142), while the joints (130, 132) on the guide rod side are located at the base of the triangle (142).

10. Sediment level sensor according to claim 9, **characterised in that**, at an orientation of the lever plate (122) such that that side (146) of the first triangle (142) which is located opposite the joint (128) on the transmitter part side is located parallel to the axis of the collecting container (14), the joint (128) on the transmitter part side forms a second triangle (148) with the spatially fixed joints (130, 132) for the second ends of the first and second guide rod arms (138a, 138b), wherein the aperture angle (150) of the second triangle (148) is 140° to 160°, preferably about 152°, and the joint (128) on the transmitter part side is located at the apex of the second triangle, while the spatially fixed joints (130, 132) for the first and second guide rod arms (138a, 138b) are located at the base of the second triangle, wherein preferably the length of the guide rod arms (138) is 8 to 15 mm, in particular about 11 mm, the distance between the spatially fixed joints (141) for the first and second guide rod arms is 12 to 18 mm, in particular about 16 mm, and the distance between the joints (130, 132) on the lever plate (122) which are on the guide rod side is 6 to 10 mm, in particular about 8 mm.

11. Sediment level sensor according to claim 3, **characterised in that** the guiding apparatus (100) has at least two rollers (152) which are spaced apart and which run within at least one guiding rail (154) which is arranged parallel to the axis of the collecting container (14) and is complementary to the rollers.

12. Sediment level sensor according to claim 11, **characterised in that** the rollers have a roller body (156) and a spindle (158) that carries the said roller body, wherein part of the roller spindles (154) is perpendicular to the guide plane of the transmitter part (104), the other part of the roller spindles (158) is parallel to the guide plane of said transmitter part (104) and the guiding rails (154) are multi-wall-profile rails.

13. Sediment level sensor according to claim 12, **characterised in that** at least four, preferably five, rollers (152) are fitted to the transmitter part (104) and said rollers run in at least two, preferably three, guiding rails (154).

14. Sediment level sensor according to one of claims 1 to 13, **characterised in that** the sensing body (50) comprises four elevations on the underside of the float which are distributed in the peripheral direction.

15. Sediment level sensor according to one of claims 1 to 14, **characterised in that** the float (52) has an axially contoured passageway (54), the central point of which is located on the axis of a pumping cone (44) belonging to the separating unit (12), wherein the larger diameter of the passage (54) is located on that face of the float (52) which faces away from the bottom (70) of the collecting container (14), and the passage is adapted to the clear outer contour of the pump cone (44).

16. Sediment level sensor according to claim 15, **characterised in that** the float (52) has, on the side that faces away from the bottom of the collecting container (14), a flattened portion (58) which extends obliquely to the axis of the separator (10) and which is arranged underneath a solid fraction outlet aperture (42) in the separating unit (12).

17. Sediment level sensor according to one of claims 14 to 16, **characterised in that** the float (52) is rigidly connected to the transmitter part (104) by a, preferably hollow, connecting rod (62).

18. Sediment level sensor according to claim 17, **characterised in that** the connecting rod (62) carries a deformable seal (64) which cooperates with a lead-through for the rod in a holding flange for the collecting container.

19. Sediment level sensor according to claim 17, **characterised in that** the connecting rod (62) is arranged inside a sealing bellows (164), of which one end is fixed to a section (162) of the housing and of which the other end is fixed to a section of the connecting rod (62) that is spaced apart from said section (162) of the housing.

20. Sediment level sensor according to claim 19, **characterised in that** at least one sliding positioning washer (170) is arranged in the interior of the sealing bellows (164).

21. Sediment level sensor according to claim 20, **characterised in that** the outer contour of the sliding positioning washer (170) is adapted to the contour of the corrugation of the sealing bellows (164) .

22. Sediment level sensor according to claims 1 to 21, **characterised in that** the transmitter part has a vane arrangement (106) comprising at least one transmitter vane and a sensor arrangement (84) comprising at least one sensor.

23. Sediment level sensor according to one of claims 1 to 22, **characterised in that** the vane arrangement (106) has two vane-carriers (108, 110) which extend parallel to the axis of the collecting container (14) and are arranged side by side and which carry vanes (112, 114, 116) which cooperate with the sensor arrangement and are located at different heights.

24. Sediment level sensor according to claims 1 to 23, **characterised in that** the sensor arrangement has a first light barrier (86) which cooperates with the vanes (112, 114) of the first vane-carrier, and a second light barrier (88) which cooperates with the vane (116) of the second vane-carrier, wherein the first light barrier (86) is arranged at a greater distance from the bottom of the collecting container than the second light barrier (88).

25. Sediment level sensor according to one of claims 1 to 24, **characterised in that** the sensor arrangement (84) has a third light barrier (90) which cooperates with a control vane (92) belonging to a lid-control transmitter part (94) which cooperates with the upper edge of the collecting container (14).

26. Sediment level sensor according to claim 25, **characterised in that** the control vane (92) has an aperture (96) and a clearance (98) which are spaced apart in the direction of attachment of the container.

27. Sediment level sensor according to one of claims 1 to 26, **characterised in that** the solid matter collecting container (14) carries, on the inner side of the bottom, a spacing cross consisting of spacing ribs (72), the central faces of which intersect the central axis of the collecting container (14).

28. Sediment level sensor according to claim 27, **characterised in that** the sold matter collecting container (14) carries, on the inner side of the bottom, further spacing ribs (74) forming a square, of which the central point is located on the central point of the spacing cross consisting of the spacing ribs (72), and of which an intersecting face is located, with one of the spacing ribs (72) of the spacing cross, on the central axis of the separating unit (12).

## Revendications

1. Sonde de niveau de sédiment pour un récipient (14) collecteur de matière solide d'un séparateur (10) de matière solide d'un liquide, en particulier des eaux usées d'un poste de travail dentaire, avec un corps (50) palpeur de sédiments et avec un appareil (80) de mesure de position coopérant avec le corps palpeur (50), le corps palpeur (50) étant maintenu par la partie mobile (102) d'un dispositif de guidage (100), **caractérisée en ce que** le corps palpeur (50) est porté par le côté inférieur d'un flotteur (52).

2. Sonde de niveau de sédiment selon la revendication 1, **caractérisée en ce que** le flotteur (52) est un corps creux du genre solide toroïdal.

3. Sonde de niveau de sédiment selon la revendication 2, **caractérisée en ce que** la partie mobile (102) du dispositif de guidage (100) déplace une partie transmettrice (104) de l'appareil (80) de mesure de position.

4. Sonde de niveau de sédiment selon la revendication 3, **caractérisée en ce que** le dispositif de guidage (100) présente un premier bras articulé (138), qui est monté à poste fixe à une extrémité (136) et qui, à l'autre extrémité (134), est accouplé par l'intermédiaire d'un mécanisme de transmission à la partie transmettrice (104), le mécanisme de transmission étant conçu de telle sorte que la composante horizontale du mouvement de l'extrémité libre du premier bras articulé est pour l'essentiel compensée.

5. Sonde de niveau de sédiment selon la revendication 4, **caractérisée en ce que** le mécanisme de transmission est un mécanisme de transmission (118) à levier.

6. Sonde de niveau de sédiment selon la revendication 5, **caractérisée en ce que** le mécanisme de transmission (118) à levier comprend deux unités de transmission distantes (120) qui présentent chacune une plaque de levier (122) et trois articulations (128, 130, 132), une première articulation (128) reliant la plaque de levier (122) à la partie transmettrice (104) du dispositif de guidage (100), la deuxième articulation reliant la plaque de levier (122) à une première extrémité (134a), montée libre, d'un premier bras articulé (138a) et la troisième articulation reliant la plaque de levier (122) à une première extrémité (134b), montée libre, d'un deuxième bras articulé (138b), et des deuxièmes extrémités (136a, b) des bras articulés (138a, b) étant montées à poste fixe (141).

7. Sonde de niveau de sédiment selon la revendication 6, **caractérisée en ce que** les articulations (128, 130, 132) présentent des alésages de palier (124-1, 124-2, 124-3) et des tourillons (126) complémentaires des alésages de palier, qui coopèrent par paires et sont disposés respectivement sur la plaque de levier et sur les bras articulés.

8. Sonde de niveau de sédiment selon la revendication 6 ou 7, **caractérisée en ce que** les articulations pour les deuxièmes extrémités, montées à poste fixe, des bras de levier présentent des alésages de palier (140) et des tourillons (126) complémentaires des alésages de palier (140), qui coopèrent par paires et sont disposés respectivement sur un boîtier (99) de l'appareil de mesure de position et sur les bras articulés.

9. Sonde de niveau de sédiment selon l'une des revendications 6 à 8, **caractérisée en ce que** les articulations (128, 130, 132) sont disposées de telle sorte qu'elles forment un premier triangle isocèle (142), l'angle d'ouverture (144) du premier triangle (142) étant compris entre 45 et 60°, de préférence étant égal à environ 52°, et une articulation (128) côté partie transmettrice se situant à la pointe du premier triangle (142), tandis que les articulations (130, 132) côté bras articulés se situent à la base du triangle (142).

10. Sonde de niveau de sédiment selon la revendication 9, **caractérisée en ce que** l'articulation (128) côté partie transmettrice, dans une orientation de la plaque de levier (122) de telle sorte que le côté (146) du premier triangle (142) qui fait face à l'articulation (128) côté partie transmettrice est parallèle à l'axe du récipient collecteur (14), forme un deuxième triangle (148) avec les articulations (130, 132) à poste fixe pour les deuxièmes extrémités du premier et du deuxième bras articulés (138a, 138b), l'angle d'ouverture (150) du deuxième triangle (148) étant compris entre 140 et 160°, de préférence étant égal à environ 152°, et l'articulation (128) côté partie transmettrice se situant à la pointe du deuxième triangle, tandis que les articulations (130, 132) à poste fixe pour le premier et le deuxième bras articulés (138a, 138b) se situent à la base du deuxième triangle, sachant que, de préférence, la longueur des bras articulés (138) est comprise entre 8 et 15 mm, en particulier est égale à environ 11 mm, que la distance entre les articulations (141) à poste fixe pour le premier et le deuxième bras articulés est comprise entre 12 et 18 mm, en particulier est égale à environ 16 mm, et que la distance entre les articulations (130, 132) côté bras articulés sur la plaque de levier (122) est comprise entre 6 et 10 mm, en particulier est égale à environ 8 mm.

11. Sonde de niveau de sédiment selon la revendication 3, **caractérisée en ce que** le dispositif de guidage (100) présente au moins deux galets distants (152) qui roulent dans au moins un rail de guidage (154) complémentaire des galets, disposé parallèlement à l'axe du récipient collecteur (14).

12. Sonde de niveau de sédiment selon la revendication 11, **caractérisée en ce que** les galets présentent un corps de galet (156) et un axe (158) portant ce corps de galet, sachant qu'une partie des axes de galets (158) est perpendiculaire au plan de guidage de la partie transmettrice (104), que l'autre partie des axes de galets (158) est parallèle au plan de guidage de la partie transmettrice (104), et que les rails de guidage (154) sont des rails profilés à parois multiples.

13. Sonde de niveau de sédiment selon la revendication 12, **caractérisée en ce qu'**au moins quatre et de préférence cinq galets (152) sont mis en place sur la partie transmettrice (104), et les galets roulent dans au moins deux et de préférence trois rails de guidage (154).

14. Sonde de niveau de sédiment selon l'une des revendications 1 à 13, **caractérisée en ce que** le corps palpeur (50) comprend quatre bossages du côté inférieur du flotteur, répartis en direction périphérique.

15. Sonde de niveau de sédiment selon l'une des revendications 1 à 14, **caractérisée en ce que** le flotteur (52) présente un passage (54) axialement profilé, dont le centre se situe sur l'axe d'un cône de pompage (44) de l'unité séparatrice (12), le plus grand diamètre du passage (54) se situant sur la face du flotteur (52) qui est opposée au fond (70) du récipient collecteur (14) et le passage étant adapté au contour extérieur de passage du cône de pompage (44).

16. Sonde de niveau de sédiment selon la revendication 15, **caractérisée en ce que** le flotteur (52) possède, sur le côté opposé au fond du récipient collecteur (14), un méplat (58) s'étendant en oblique par rapport à l'axe du séparateur (10) et disposé en dessous d'une ouverture (42) de sortie de fraction solide de l'unité séparatrice (12).

17. Sonde de niveau de sédiment selon l'une des revendications 14 à 16, **caractérisée en ce que** le flotteur (52) est relié rigidement à la partie transmettrice (104) par une tige de liaison (62) de préférence creuse.

18. Sonde de niveau de sédiment selon la revendication 17, **caractérisée en ce que** la tige de liaison (62) porte un joint d'étanchéité déformable (64) qui coopère avec un passage de tige d'une bride de maintien pour le récipient collecteur.

19. Sonde de niveau de sédiment selon la revendication 17, **caractérisée en ce que** la tige de liaison (62) est disposée à l'intérieur d'un soufflet d'étanchéité (164) dont une extrémité est fixée sur une partie de boîtier (162) et dont l'autre extrémité est fixée sur une partie de la tige de liaison (62) qui est distante de la partie de boîtier (162).

20. Sonde de niveau de sédiment selon la revendication 19, **caractérisée en ce qu'**au moins une rondelle glissante de positionnement (170) est disposée à l'intérieur du soufflet d'étanchéité (164).

21. Sonde de niveau de sédiment selon la revendication 20, **caractérisée en ce que** le contour extérieur de la rondelle glissante de positionnement (170) est adaptée au contour de l'ondulation du soufflet d'étanchéité (164).

22. Sonde de niveau de sédiment selon l'une des revendications 1 à 21, **caractérisée en ce que** la partie transmettrice présente un ensemble de languette (106) comprenant au moins une languette transmettrice, et un ensemble de capteur (84) comprenant au moins un capteur.

23. Sonde de niveau de sédiment selon l'une des revendications 1 à 22, **caractérisée en ce que** l'ensemble de languette (106) présente deux porte-languettes (108, 110), qui sont disposés en juxtaposition en s'étendant parallèlement à l'axe du récipient collecteur (14) et qui portent des languettes (112, 114, 116) qui coopèrent avec l'ensemble de capteur et se trouvent à différentes hauteurs.

24. Sonde de niveau de sédiment selon l'une des revendications 1 à 23, **caractérisée en ce que** l'ensemble de capteur présente un premier barrage photoélectrique (86), qui coopère avec les languettes (112, 114) du premier porte-languettes, et un deuxième barrage photoélectrique (88), qui coopère avec la languette (116) du deuxième porte-languettes, le premier barrage photoélectrique (86) étant disposé à une plus grande distance du fond du récipient collecteur que le deuxième barrage photoélectrique (88).

25. Sonde de niveau de sédiment selon l'une des revendications 1 à 24, **caractérisée en ce que** l'ensemble de capteur (84) présente un troisième barrage photoélectrique (90), qui coopère avec une languette de contrôle (92) d'une partie transmettrice (94) de contrôle de couvercle qui coopère avec le bord supérieur du récipient collecteur (14).

26. Sonde de niveau de sédiment selon la revendication 25, **caractérisée en ce que** la languette de contrôle (92) présente une ouverture (96) et un évidement (98) qui sont distants dans la direction de mise en place du récipient.

27. Sonde de niveau de sédiment selon l'une des revendications 1 à 26, **caractérisée en ce que** le récipient (14) collecteur de matière solide porte, sur le côté intérieur du fond, une croix d'espacement constituée de nervures d'espacement (72) dont les faces médianes coupent l'axe médian du récipient collecteur (14).

28. Sonde de niveau de sédiment selon la revendication 27, **caractérisée en ce que** le récipient (14) collecteur de matière solide porte, sur le côté intérieur du fond, d'autres nervures d'espacement (74) formant un carré et dont le centre se situe au centre de la croix d'espacement constituée des nervures d'espacement (72), et dont une face d'intersection avec une des nervures d'espacement (72) de la croix d'espacement se situe sur l'axe médian de l'unité séparatrice (12).
